# EUROPEAN PATENT APPLICATION

(11) **EP 1 681 197 A1**
(43) Date of publication of application: **19.07.2006**
(21) Application number: 04818174.7
(22) Date of filing: 26.10.2004
(51) Int. Cl.: B60L 3/00

(54) **ELECTRIC VEHICLE**

(30) Priority: 05.11.2003 JP 2003375177
(71) Applicant: YAMAHA MOTOR CO., LTD., Iwata-shi Shizuoka 438-8501 (JP)
(72) Inventor: TAUE, Jun, Iwata-shi, Shizuoka 4388501 (JP); MIZUTANI, Gen, Iwata-shi Shizuoka 4388501 (JP); SUGII, Kiyohisa, Iwata-shi Shizuoka 4388501 (JP)
(74) Representative: Grünecker, Kinkeldey, Stockmair & Schwanhäusser Anwaltssozietät
(86) International application number: PCT/JP2004/015850
(87) International publication number: WO 2005/044613

(57) **Abstract**

[Problem to be Solved] To assist a running sense to provide a rider with easiness

[Solution] In an electric vehicle running by driving a drive motor 18 with generated electric power of a generator 13 driven by an engine 10 and with electric power of a battery 15, the electric vehicle includes a residual battery power detecting means 201 for detecting a residual power capacity of the battery 15, and a motor control means 200 for lowering a voltage of an accelerator output signal outputted in response to a rotational angle of an accelerator 5a to be less than a voltage given under a condition that the residual power capacity is at or more than a preset lower limit, when the residual power capacity becomes less than the lower limit, so as to control a rotational speed of the drive motor 18.

## Description

### [Field of the Invention]

This invention relates to an electric vehicle running by driving a drive motor with generated electric power of a generator driven by an engine and with electric power of a battery.

### [Background art]

Conventionally, some electric vehicles are hybrid type electric vehicles incorporating a generator of an engine drive type for charging a battery while running to supply electric power to a drive motor driving a drive wheel. Some of this type of vehicles have a structure in which the generated electric power of the generator and the electric power of the battery are supplied to the drive motor so as to run only with the power of this drive motor (for example, see Patent Document 1).
Patent Document 1: JP-A-2001-105899 (pages 1-9, FIGs. 1-11)

### [Disclosure of the invention]

### [Problems to be Solved by the Invention]

If these vehicles employ a control system that controls a vehicle speed by a rider holding and rotating an accelerator grip, which conventional engine drive vehicles typically have, sound is smaller than the engine drive vehicles and is quieter in the running state. These vehicles thus can bring some uneasiness to the rider.

This is because the rider has no element of "sound" of the engine following an operation of the accelerator grip and loses one of large elements of a running sense. Consequently, the rider can have harder uneasiness.

This invention is made under the circumstances, and an object thereof is to provide a hybrid type electric vehicle that can assist a running sense to provide a rider with easiness.

### [Means for Solving the Problem]

In order to solve the problem and to achieve the object, this invention is constructed as follows:

In accordance with an aspect of the invention recited in Claim 1, in an electric vehicle running by driving a drive motor with generated electric power of a generator driven by an engine and with electric power of a battery, the electric vehicle includes a residual battery power detecting means for detecting a residual power capacity of the battery, and a motor control means for lowering a voltage of an accelerator output signal outputted in response to a rotational angle of an accelerator to be less than a voltage given under a condition that the residual power capacity is at or more than a preset lower limit, when the residual power capacity becomes less than the lower limit, so as to control a rotational speed of the drive motor.

In accordance with another aspect of the invention recited in Claim 2, in an electric vehicle running by driving a drive motor with generated electric power of a generator driven by an engine and with electric power of a battery, the electric vehicle includes a residual fuel amount detecting means for detecting a residual fuel amount of a fuel tank, and a motor control means for lowering a voltage of an accelerator output signal outputted in response to a rotational angle of an accelerator to be less than a voltage given under a condition that the residual fuel amount is at or more than a preset lower limit, when the residual fuel amount becomes less than the lower limit, so as to control a rotational speed of the drive motor.

In accordance with a further aspect of the invention recited in Claim 3, in an electric vehicle running by driving a drive motor with generated electric power of a generator driven by an engine and with electric power of a battery, the electric vehicle includes an abnormality detecting means for detecting abnormality of the vehicle, and a motor control means for lowering the maximum voltage of an accelerator output signal outputted in response to a rotational angle of an accelerator to be less than the maximum voltage given under a normal condition, when the abnormality is detected, so as to control a rotational speed of the drive motor.

In accordance with a further aspect of the invention recited in Claim 4, in an electric vehicle running by driving a drive motor with generated electric power of a generator driven by an engine and with electric power of a battery, the electric vehicle includes a vehicle state detecting means for detecting a vehicle state, and an engine control means for changing an engine speed of the engine in response to a detection result of the vehicle state.

### [Effect of the Invention]

According to the construction, this invention has the following effects.

In the aspect of the invention recited in Claim 1, when the residual power capacity becomes less than the preset lower limit, the voltage of the accelerator output signal outputted in response to the rotational angle of the accelerator is lowered to be less than the voltage given under the condition that the residual power capacity is at or more than the lower limit so as to control the rotational speed of the drive motor. In order to keep a preset running speed, a rotation of the accelerator needs to be larger than the rotation given under the condition that the residual power capacity is at or more than the preset lower limit. As thus constructed, the residual power capacity of the battery can be certainly transmitted to the rider as the response from the accelerator without any indications on a meter panel or the like. Particularly, a rider of a motorcycle needs to have much attention to a forward location in comparison with a driver of a four wheeled vehicle. For the rider's concentration to the drive of the vehicle, the response of the accelerator is more useful to certainly inform the residual power capacity of the battery to the rider than the indication by the panel. Also, if the electric power is consumed over the generator's power capacity, the power output can be restricted in proportion to a residual amount before starting power generation/charging operations to manage the battery power capacity.

In the aspect of the invention recited in Claim 2, when the residual fuel amount becomes less than the preset lower limit, the voltage of the accelerator output signal outputted in response to the rotational angle of the accelerator is lowered to be less than the voltage given under the condition that the residual fuel amount is at or more than the lower limit so as to control the rotational speed of the drive motor. In order to keep the preset running speed, a rotation of the accelerator needs to be larger than the rotation given under the condition that the residual fuel amount is at or more than the preset lower limit. As thus constructed, the residual fuel amount can be certainly transmitted to the rider as the response from the accelerator without any indications on the meter panel or the like. Particularly, the rider of the motorcycle needs to have much attention to a forward location in comparison with the rider of the four wheeled vehicle. For the rider's concentration to the drive of the vehicle, the response of the accelerator is more useful to certainly inform the residual fuel amount to the driver than the indication by the panel.

In the aspect of the invention recited in Claim 3, when the abnormality is detected, the maximum voltage of the accelerator output signal outputted in response to the rotational angle of the accelerator is lowered to be less than the maximum voltage given under the normal condition so as to control the rotational speed of the drive motor. Because, when the abnormality occurs, the maximum voltage of the normal condition cannot be obtained even though the rotational angle of the accelerator becomes larger, the abnormality of the vehicle under the running condition can be certainly transmitted to the rider without any indications on the meter panel or the like. Particularly, the rider of the motorcycle needs to have much attention to a forward location in comparison with the driver of the four wheeled vehicle. For the rider's concentration to the drive of the vehicle, the response of the accelerator is more useful to certainly inform the abnormality to the rider than the indication by the panel.

In the aspect of the invention recited in Claim 4, the engine speed of the engine is changed in response to the detection result of the vehicle state; thereby, vibrations and sounds of the engine are intentionally changed in response to the vehicle state (a vehicle speed, a temperature, a residual gasoline amount, a battery condition, etc.) to be transmitted to the rider. For instance, when the vehicle comes to an upslope and runs with both of the power of the battery and the power generated by the engine, if the residual battery power approaches the preset lower limit, the engine speed can be increased, or the engine speed can have a periodic change and the period is shorten so that the rider can feel the driving state. Thereby, the vehicle condition can be transmitted to the rider as sensory or intuitive information. The information thus can be transmitted to the rider without giving uneasiness.

### [Best Mode for Carrying out the Invention]

Although an embodiment of the electric vehicle of this invention will be described below, this invention is not limited to this embodiment. Also, this embodiment of the invention is the most preferable one, and terms of this invention are not limited to those of the embodiment.

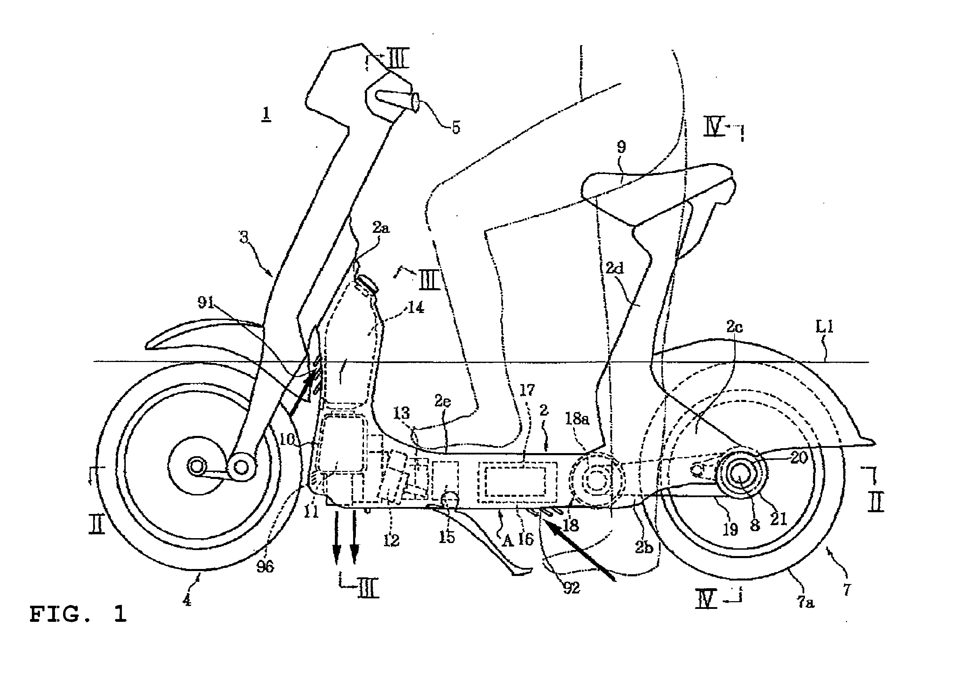

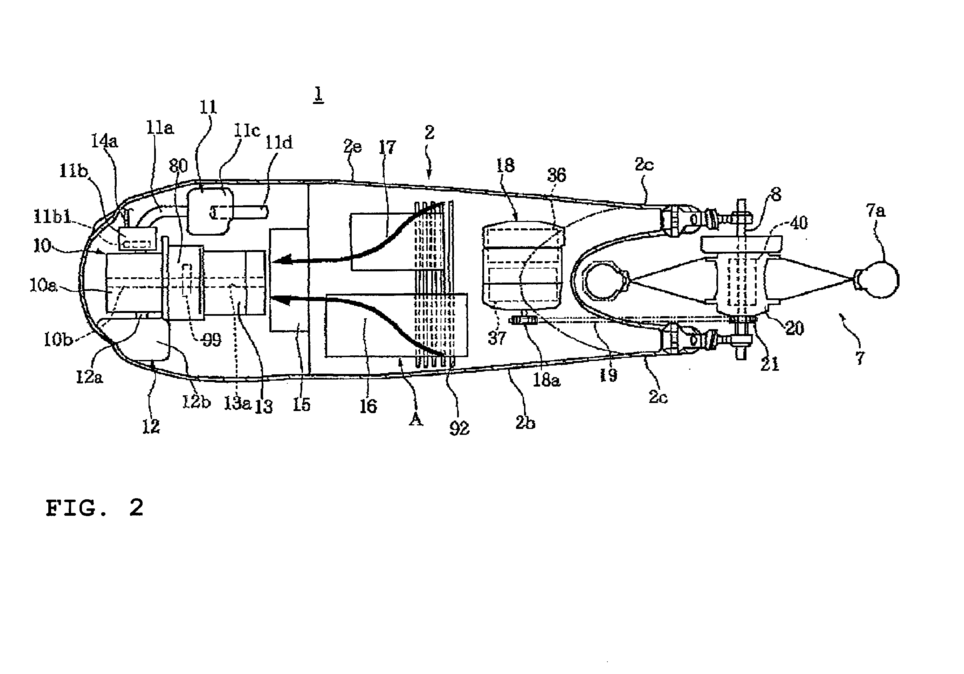

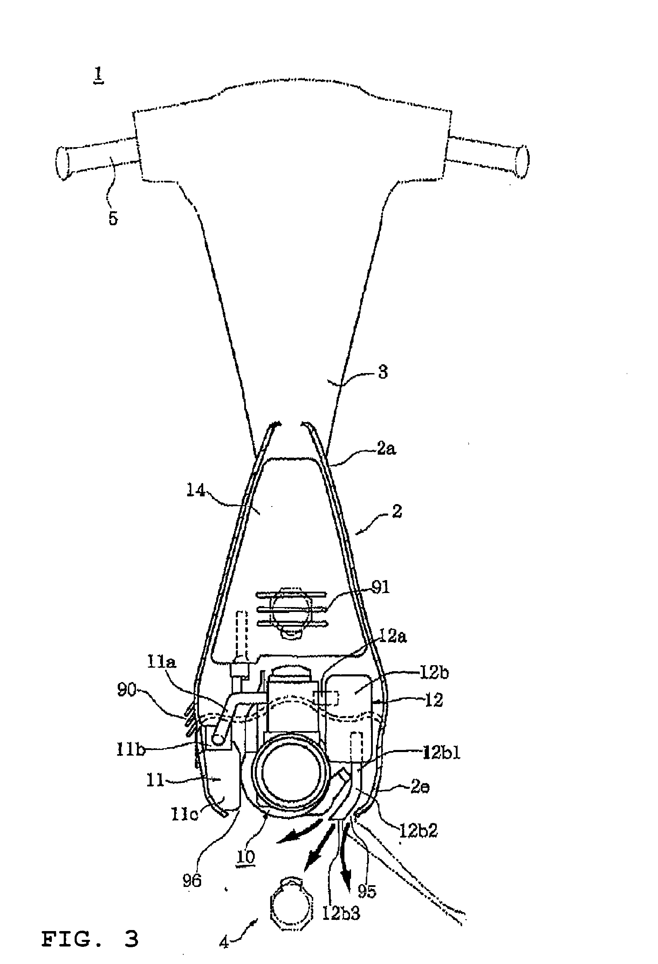

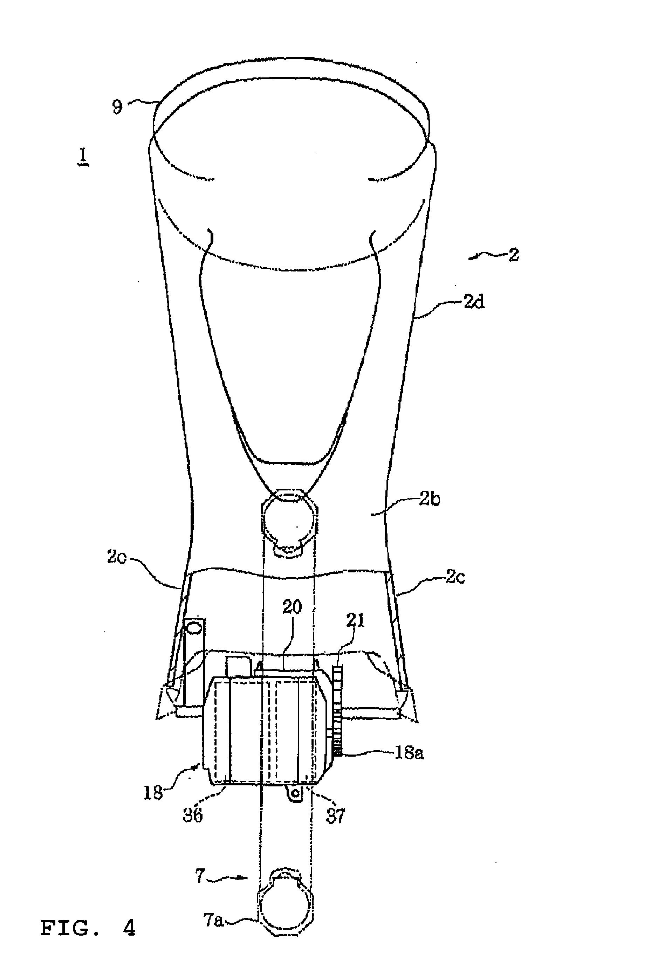

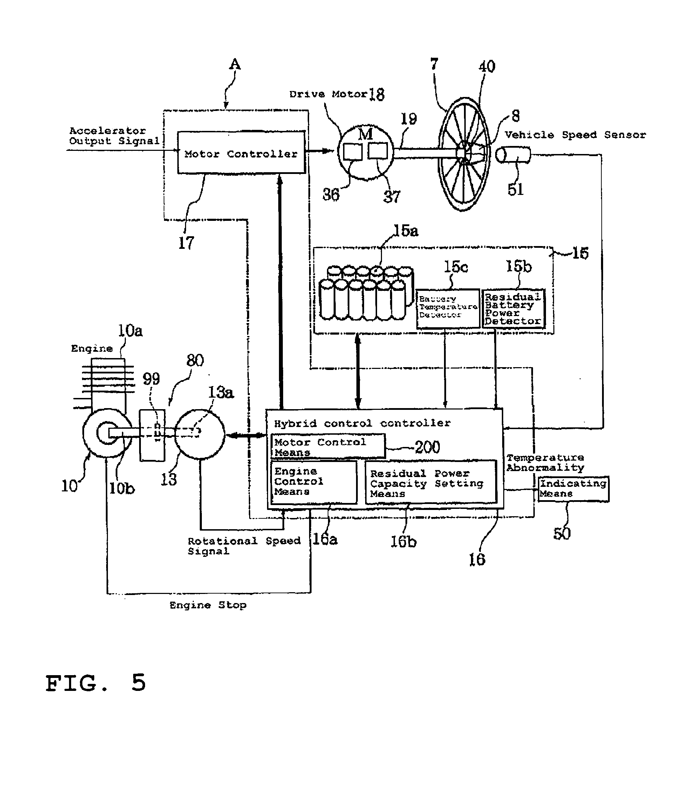

FIG. 1 is a side elevational view of a hybrid type electric vehicle, FIG. 2 is a cross sectional view taken along the line II-II of FIG. 1, FIG. 3 is a cross sectional view taken along the line III-III of FIG. 1, FIG. 4 is a cross sectional view taken along the line IV-IV of FIG. 1, and FIG. 5 is a graph for explaining a power transmission of the hybrid type electric vehicle.
Through FIG. 1 to FIG. 4, a hybrid type electric vehicle 1 is shown as an electric vehicle in this embodiment. This hybrid type electric vehicle 1 has a front fork 3 supported by a front end portion 2a of a vehicle body 2 for pivotal movement. This front fork 3 carries a front wheel which is a steerable wheel 4. Steering handle bars 5 extend atop the front fork 3.

A right and left pair of arms 2c extends rearward in a rear end portion 2b of the vehicle body 2. This right and left pair of arms 2c supports an axle 8 of a rear wheel which is a drive wheel 7. The rear end portion 2b of the vehicle body 2 has a saddle pedestal 2d extending upward. A saddle 9 is attached to this saddle pedestal 2d.

A vehicle body footboard 2e extends between the front end portion 2a and the rear end portion 2b of the vehicle body 2. As shown in FIG. 2, this vehicle body footboard 2e has a width slightly larger than a width of the right and left pair of arms 2c to ensure a foot space for a rider sitting on the saddle 9.

In the interior of the vehicle body footboard 2e of this vehicle body 2, an engine 10 is disposed with its cylinder axis extending vertically. An air intake system 11 is disposed on a right side of the engine 10 in the vehicle running direction, while an exhaust system 12 is disposed on a left side in the vehicle running direction, both in a plan view. The engine 10 is an air-cooled four stroke engine.

As shown in FIG. 2, the air intake system 11 has an air intake conduit 11a, a carburetor 11b and an air cleaner 11c. The air intake conduit 11a is connected to a right side of a cylinder 10a of the engine 10 in the vehicle running direction. The carburetor 11b is positioned in the air intake conduit 11a. An air introducing pipe 11d is connected to a rear portion of the air cleaner 11c. A fuel tank 14 is coupled with the carburetor 11b through a fuel supply conduit 14a. A fuel supply operation is made by an electromagnetic valve 11b1 provided at the carburetor 11b.

The exhaust system 12 has an exhaust conduit 12a and a muffler 12b. The exhaust conduit 12a is connected to a left side of the cylinder 10a of the engine 10 in the vehicle running direction, and the muffler 12b is connected to the exhaust conduit 12a. The muffler 12b is disposed with an exhaust gas discharge pipe 12b1 extending downward. As shown in FIG. 3, this exhaust gas discharge pipe 12b1 bends toward the engine side. This bending portion 12b2 defines an opening 12b3 positioned below the engine 10, and can discharge exhaust gases toward a portion of the ground under a center of the vehicle body.

Also, as shown in FIG. 2, a generator 13 is disposed in the rear of the engine 10. The generator 13 is driven by the engine 10 to generate electric power. The fuel tank 14 accumulating the fuel for the engine 10 is positioned above the engine 10.

An engine cooling fan 80 is positioned between the engine 10 and the generator 13. A crankshaft 10b of the engine 10 extends in the vehicle running direction. This crankshaft 10b and a rotor shaft 13a of the generator 13 are coupled with each other through a coupling 99 in a direction such that respective shaft ends oppose each other. Accordingly, the drive power of the crankshaft 10b of the engine 10 is transmitted to the rotor shaft 13a of the generator 13. The crankshaft 10b has the engine cooling fan 80.

Because the engine cooling fan 80 is provided and it is positioned between the engine 10 and the generator 13, the engine 10 and the generator 13 can be cooled with the compact and simple structure.

Also, the vehicle body footboard 2e of the vehicle body 2 has a battery 15 positioned in the rear of the generator 13. Further, a control device A including a hybrid control controller 16 and a motor controller 17 is disposed in the rear of the battery 15. A drive motor 18 is disposed in the rear of the hybrid control controller 16 and the motor controller 17. A sprocket 18a of the drive motor 18 is connected to a sprocket 21 of a wheel 20 of the drive wheel 7 through a chain 19.

The drive motor 18 is positioned in the rear of the engine 10 in the vehicle running direction to shorten a distance between the drive motor 18 and the axle of the drive wheel 7.

As thus discussed, the power of the drive motor 18 is transmitted to the drive wheel 7 side through the chain 19. The power, however, can be transmitted to the drive wheel 7 side through a driveshaft. A metal chain normally used for a bicycle, and the like. or a chain made from a rubber belt and reinforced with carbon fibers can be used as the chain 19.

As shown in FIG. 5, the battery 15 includes a number of battery cells 15a, a residual battery power detector 15b and a battery temperature detector 15c. The battery cells 15a can be nickel hydrogen cells or nickel cadmium cells connected in series. The residual battery power detector 15b sends residual battery power information to the hybrid control controller 16, while the battery temperature detector 15c sends battery temperature information to the hybrid control controller 16.

The hybrid type electric vehicle 1 in this embodiment has the steerable wheel 4 and the drive wheel 7. Between this steerable wheel 4 and the drive wheel 7, the engine 10, the generator 13, the battery 15, the hybrid control controller 16, the motor controller 17 and the drive motor 18 are disposed in the interior of the vehicle body footboard 2e. The electric power generated by the generator 13 driven by the engine 10 and the electric power of the battery 15 are supplied to the drive motor 18. The power of this drive motor 18 is transmitted to the drive wheel 7 so that the vehicle 1 runs. The wheel 20 of the drive wheel 7 has a transmission 40.

As shown in FIGs. 2, 4 and 5, the drive motor 18 according to this embodiment includes a motor 36 and a transmission 37. The transmission 37 varies the rotation of the motor 36 to drive the drive wheel 7.

The hybrid control controller 16 controls a charge/discharge operation of the battery 15 and an engine speed of the engine 10. As shown in FIG. 5, the controller 16 has an engine control means 16a and a residual power capacity setting means 16b for setting the residual power capacity of the battery 15. An indicating means 50 is connected to the controller 16. The indicating means 50 has a warning lamp, which is not shown, and is positioned adjacent to the steering handle bar 5. When the battery 15 becomes weak, the hybrid control controller 16 turns on the warning lamp. The residual power capacity setting means 16b determines weak battery 15 based upon the residual battery power information of the residual battery power detector 15b.

The engine control means 16a employs a construction in which the engine control means 16a starts the engine 10 to initiate the power generating/charging operation by the generator 13 when the residual power capacity set by the residual power capacity setting means 16b becomes less than a preset lower limit, while the engine control means 16a stops the engine 10 to discontinue the power generating/charging operation by the generator 13 when the residual power capacity set by the residual power capacity setting means 16b reaches a preset upper limit. That is, when the residual power capacity of the battery 15 becomes less than the lower limit, the engine 10 drives the generator 13 until the residual power capacity reaches the upper limit so that the power generated by the generator 13 is charged into the battery 15.

The engine control means 16a also employs a construction in which the engine control means 16a stops the engine 10 in a high speed range where a vehicle speed detected by a vehicle speed sensor 51 is over a preset amount. Further, in the construction, the engine control means 16a keeps the engine 10 standstill when the vehicle speed sensor 51 senses that the hybrid type electric vehicle 1 does not run and is standstill.

An accelerator signal outputted following an operation of the accelerator by the rider is inputted into the motor controller 17. The motor controller 17 controls the power of the drive motor 18 so that the power can be generally proportion to the magnitude of the operation of the accelerator.

The engine 10 in this embodiment starts when the generator 13 drives the crankshaft 10b, and stops when the hybrid control controller 16 opens an ignition circuit.

In this embodiment, a speed range can be broaden because the drive motor 18 incorporates the transmission 37, the axle of the drive wheel 7 has the transmission 40, and the chain 19 transmits the power of the drive motor 18 to the drive wheel side. Accordingly, the drive motor 18, even if it is small, can efficiently achieve the maximum speed while assuring a sufficient start performance. The drive motor 18 is positioned in front of a tire periphery 7a of the drive wheel 7 in the vehicle running direction.

Because both of the drive motor and the drive wheel have the transmissions 37, 40 of their own, the structures of the transmissions 37, 40 can be compact and simple. In addition, the transmissions 37, 40 can be incorporated while the weight increase of the drive wheel side restricted to the minimum.

Because the transmissions 37, 40 can keep a running performance in a sufficient speed range even though a drive motor having the small maximum power or a small rated power is used, the latest model of the hybrid type electric vehicle 1 which has a small engine prime mover and is energy-saving, clean because of small exhaust gases, compact and light can be constructed.

The transmissions 37, 40 are automatic transmissions and can further simplify the operation made by the operator. Thus, the operation performance and the running performance can be enhanced. Alternatively, only one of the transmission 37 and the transmission 40 can be the automatic transmission. Also, in this embodiment, a driveshaft can replace the chain 19 to transmit the power of the drive motor 18 to the drive wheel side.

In the hybrid type electric vehicle 1 of this embodiment, the engine 10, the generator 13, the battery 15, the control device A, the drive motor 18 are positioned in this order, fore to aft in the advance direction, and in series in the interior of the vehicle body foot board 2e; thereby, the vehicle body can be slim. Accordingly, air resistance of the vehicle body can be drastically reduced. In addition, because the engine 10, the generator 13, the battery 15, the control device (A) and the drive motor 18 are linearly positioned, conduits and wirings connected to those components can have the minimum lengths. Electrical resistance also can be minimized together with the minimum lengths of the wirings.

As shown in FIG. 1, the vehicle body footboard 2e is positioned lower than a line L1 connecting upper ends of the steerable wheel 4 and the drive wheel 7 to each other. Thereby, the air resistance of the vehicle body can be drastically reduced.

The vehicle body footboard 2e has a cooling wind inlet opening 90 for cooling wind positioned at a side portion on the air intake system side, another cooling wind inlet opening 91 positioned above and in front of the engine, and a further cooling wind inlet opening 92 positioned below the drive motor. As shown in FIG. 3, the vehicle body footboard 2e has a still further cooling wind inlet opening 96 positioned below the air intake system, and has a cooling wind discharge opening 95 through which the cooling wind after cooling the components is discharged positioned below the exhaust system.

When the hybrid type electric vehicle 1 runs, the interior of the vehicle body footboard 2e has a negative pressure because the engine cooling fan 80 operates. Thus, as shown in FIG. 3, the cooling wind is introduced through the cooling wind inlet opening 90 from the side portion on the air intake system side, through the cooling wind inlet opening 91 from the location above and in front of the engine, and through the cooling wind inlet opening 96 from the location below the air intake system. Also, as shown in FIG. 2, the cooling wind is introduced through the cooling wind inlet opening 92 from the location below the drive motor. The cooling wind cools the drive motor 18, the control device A, the battery 15, the generator 13 and the engine 10. The cooling wind also cools the exhaust conduit 12a and the muffler 12b, which forms the exhaust system 12, in this order, i.e., from the component which has a lower temperature. The cooling efficiency thus can be improved. Because the sufficient cooling operation can be made with the simple structure, such a compact, light and inexpensive hybrid vehicle can be constructed.

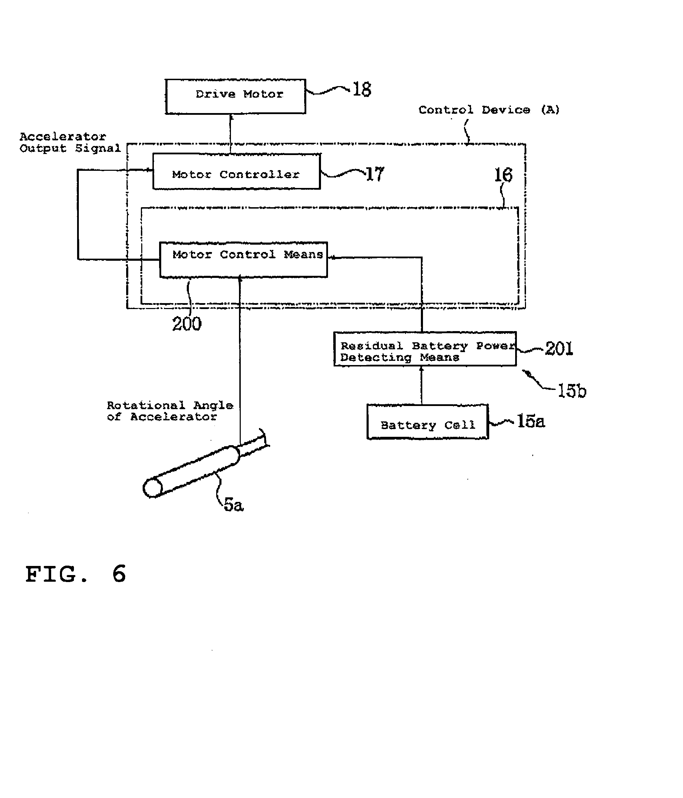

In the aspect of the invention recited in Claim 1, as shown in FIG. 6, the electric vehicle includes a residual battery power detecting means 201 formed with the residual battery power detector 15b for detecting a residual power capacity of the battery 15, and a motor control means 200 for lowering a voltage of an accelerator output signal outputted in response to a rotational angle of an accelerator 5a to be less than a voltage given under a condition that the residual power capacity is at or more than a preset lower limit, when the residual power capacity becomes less than the lower limit, so as to control a rotational speed of the drive motor 18.

In this embodiment, the hybrid control controller 16 has the motor control means 200, and the battery 15 has the residual battery power detecting means 201. However, the hybrid control controller 16 can have the residual battery power detecting means 201.

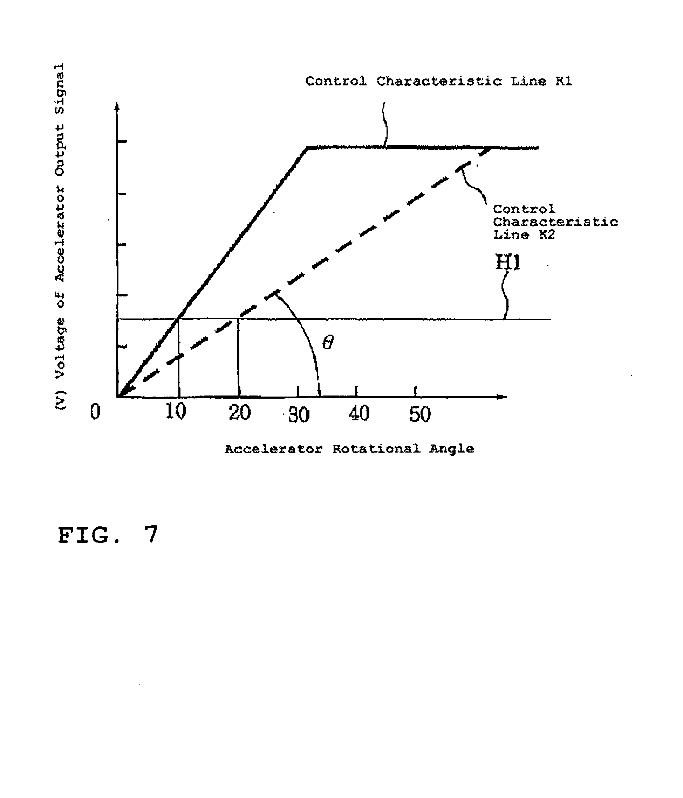

As shown in FIG. 7, the motor control means 200 makes a voltage v of the accelerator output signal larger in response to a rotational angle θ of the accelerator 5a to control the rotational speed of the drive motor 18. This rotational speed control is made in accordance with a control characteristic line K1, and the voltage v reaches the maximum at a preset accelerator rotational angle θ. Normally, the rider rotates the accelerator 5a approximately 0 to 30 degrees to control the rotational speed of the drive motor 18.

When the residual power capacity becomes less than the lower limit, the motor control means 200 controls the rotational speed in accordance with the control characteristic line K2. That is, if a running speed H1 corresponding to 10 degrees of the rotational angle θ of the accelerator 5a in the control of the control characteristic line K1 needs to be maintained, the rotational angle θ of the accelerator 5a is required to be 20 degrees in the control of the control characteristic line K2. This angle means that the rotation of the accelerator 5a becomes larger.

1 As thus discussed, when the residual power capacity of the battery 15 becomes less than the preset lower limit, the voltage of the accelerator output signal outputted in response to the rotational angle of the accelerator 5a is lowered to be less than the voltage given under the condition that the residual power capacity is at or more than the lower limit so as to control the rotational speed of the drive motor 18. Thus, when the residual power capacity of the battery 15 becomes less than the preset lower limit, the rotation of the accelerator 5a needs to be larger than the rotation made under the condition that the residual power capacity is at or more than the lower limit to keep a certain running speed.

Accordingly, the residual power capacity of the battery 15 can be certainly transmitted to the rider as the response from the accelerator 5a without any indications on a meter panel or the like. Particularly, a rider of a motorcycle needs to have much attention to a forward location in comparison with a driver of a four wheeled vehicle. For the rider's concentration to the drive of the vehicle, the response of the accelerator is more useful to certainly transmitted the residual power capacity of the battery to the rider than the indication by the panel. Also, if the electric power is consumed over the generator's power capacity, the power output can be restricted in proportion to a residual amount before starting power generation/charging operations to manage the battery power capacity.

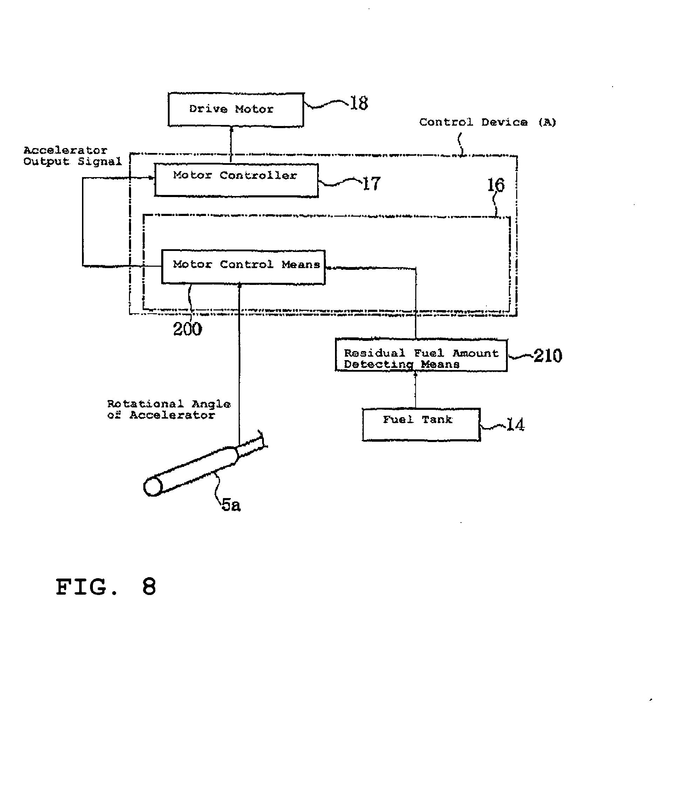

In the aspect of the invention recited in Claim 2, as shown in FIG. 8, the electric vehicle includes a residual fuel amount detecting means 210 for detecting a residual fuel amount of the fuel tank 14, and the motor control means 200 for lowering the voltage of the accelerator output signal outputted in response to the rotational angle of the accelerator 5a to be less than a voltage given under a condition that the residual fuel amount is at or more than a preset lower limit, when the residual fuel amount becomes less than the lower limit, so as to control the rotational speed of the drive motor 18.

In this embodiment, the hybrid control controller 16 has the motor control means 200, and the fuel tank 14 has the residual fuel amount detecting means 210.

As shown in FIG. 7, in this embodiment, when the residual fuel amount becomes less than the lower limit, the motor control means 200 controls the rotational speed in accordance with the control characteristic line K2. That is, if the running speed H1 corresponding to 10 degrees of the rotational angle θ of the accelerator 5a in the control of the control characteristic line K1 needs to be maintained, the rotational angle θ of the accelerator 5a is required to be 20 degrees in the control of the control characteristic line K2. This angle means that the rotation of the accelerator 5a becomes larger.

As thus discussed, when the residual fuel amount becomes less than the preset lower limit, the voltage of the accelerator output signal outputted in response to the rotational angle of the accelerator 5a is lowered to be less than the voltage given under the condition that the residual fuel amount is at or more than the lower limit so as to control the rotational speed of the drive motor 18. Thus, when the residual fuel amount becomes less than the preset lower limit, the rotation of the accelerator 5a needs to be larger than the rotation made under the condition that the residual power capacity is at or more than the lower limit to keep a certain running speed.

Accordingly, the residual fuel amount can be certainly transmitted to the rider as the response from the accelerator 5a without any indications on a meter panel or the like. Particuiariy, a rider of a motorcycle needs to have much attention to a forward location in comparison with a driver of a four wheeled vehicle. For the rider's concentration to the drive of the vehicle, the response of the accelerator is more useful to certainly inform the residual fuel amount to the rider than the indication by the panel.

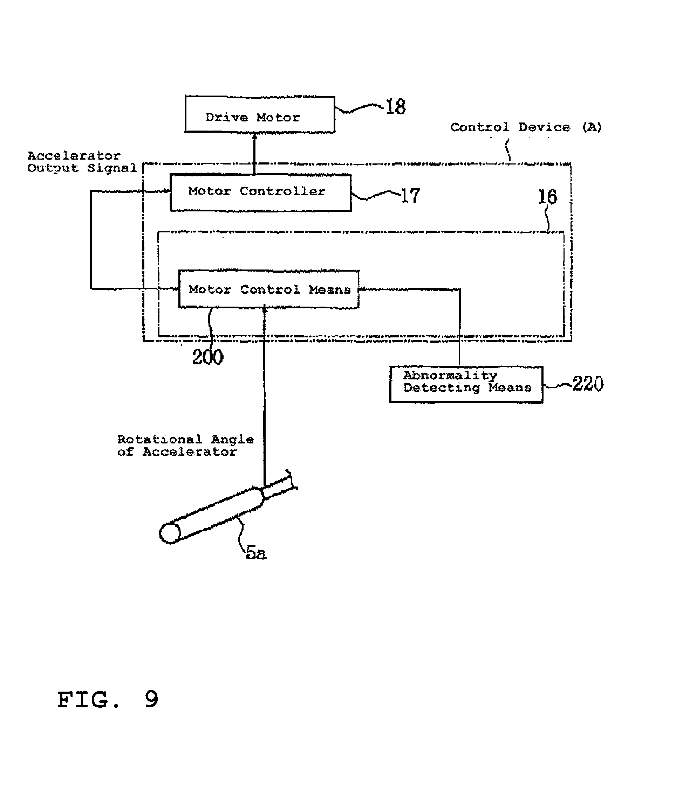

In the aspect of the invention recited in Claim 3, as shown in FIG. 9, the electric vehicle includes an abnormality detecting means 220 for detecting abnormality of the vehicle, and the motor control means 200 for lowering the maximum voltage of the accelerator output signal outputted in response to the rotational angle of the accelerator 5a to be less than the maximum voltage given under a normal condition, when the abnormality is detected, so as to control the rotational speed of the drive motor 18.

In this embodiment, the hybrid control controller 16 has the motor control means 200, and the engine 10 or the like has the abnormality detecting means 220.

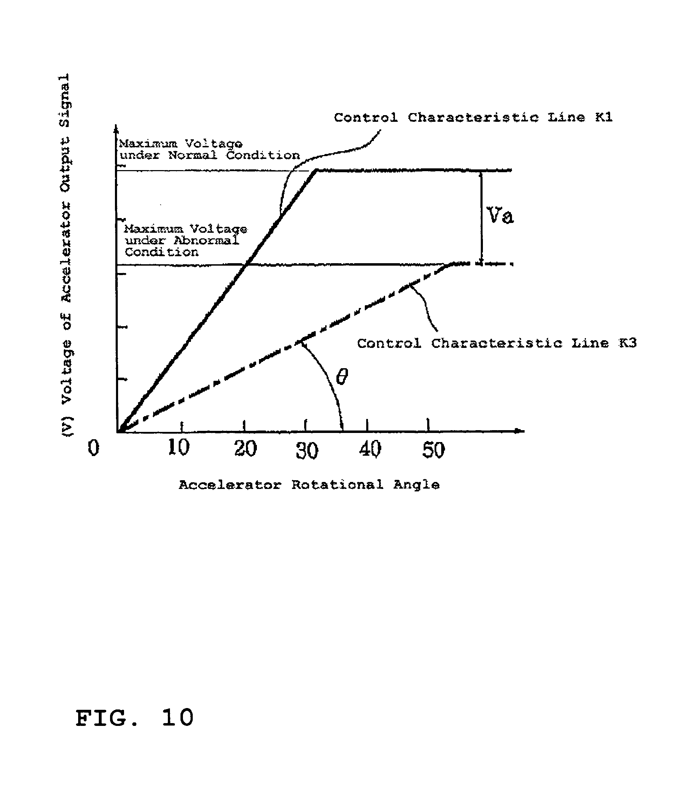

The abnormality detecting means 220 detects abnormality such as, for example, an engine temperature, insufficiency of the fuel or the weak battery. As shown in FIG. 10, when the abnormality is detected, the motor control means 200 controls the rotational speed in accordance with the control characteristic line K3 to lower the maximum voltage of the accelerator output signal outputted in response to the rotational angle of the accelerator 5a to be less than the preset voltage.

As thus discussed, when the abnormality is detected, the voltage of the accelerator output signal outputted in response to the rotational angle of the accelerator 5a is lowered to be less than the voltage given under the normal condition so as to control the rotational speed of the drive motor 18. Thus, under the abnormal condition, the maximum running speed that can be given under the normal condition is not obtained. The abnormality thus can be certainly transmitted to the rider without any indications on a meter panel. Particularly, a rider of a motorcycle needs to have much attention to a forward location in comparison with a driver of a four wheeled vehicle. For the rider's concentration to the drive of the vehicle, the response of the accelerator is more useful to certainly inform the abnormality to the rider than the indication by the panel.

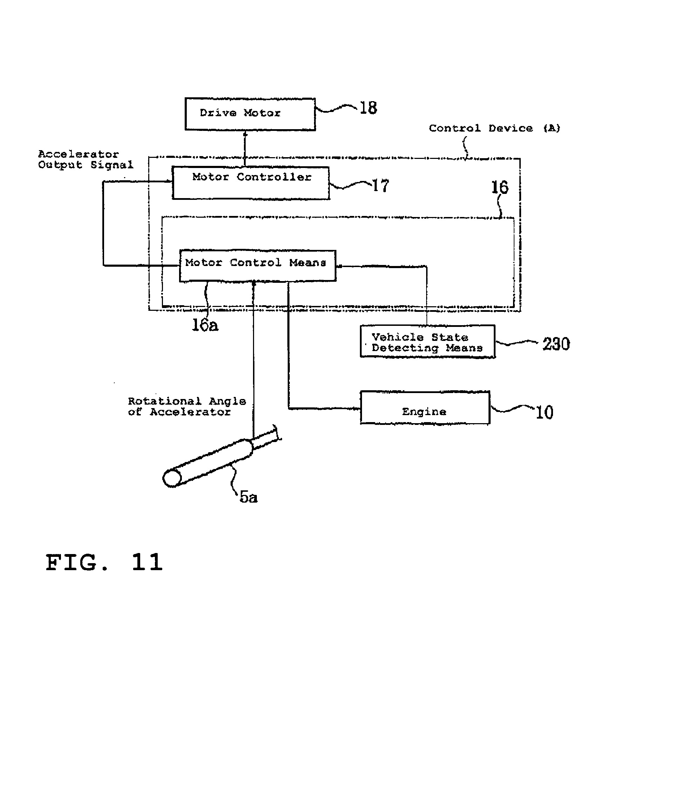

In the aspect of the invention recited in Claim 4, as shown in FIG. 11, the electric vehicle includes a vehicle state detecting means 230 for detecting a vehicle state, and an engine control means 16a for changing an engine speed of the engine 10 in response to a detection result of the vehicle state. In this embodiment, the hybrid control controller 16 has the engine control means 16a, and the engine 10 or the like has the vehicle state detecting means 230.

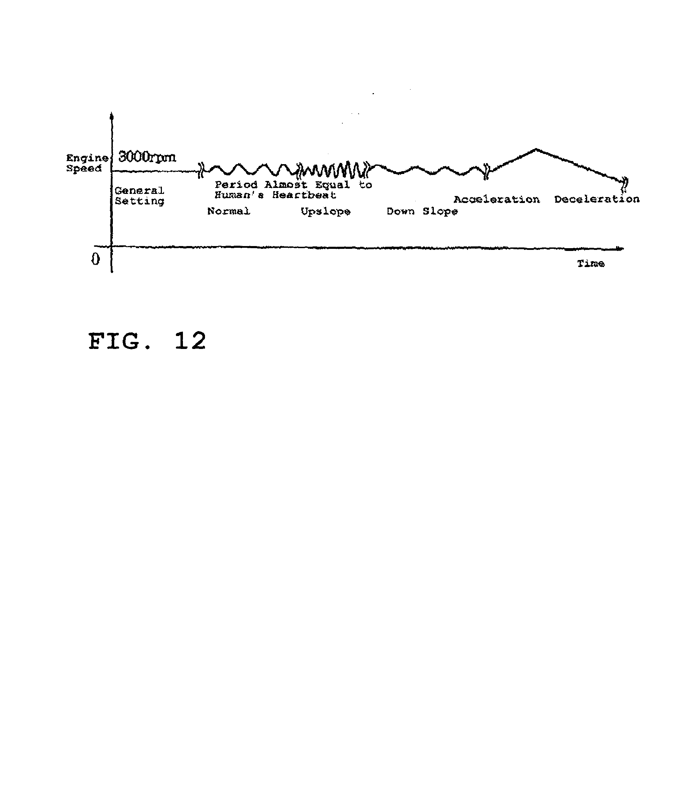

The vehicle state detecting means 230 detects the vehicle state such as, for example, the vehicle speed, the engine temperature, the residual fuel amount or the battery condition. As shown in FIG. 12, for example, the engine control means 16a gives wavering rotational fluctuations in a normal operation, although conventionally only a preset engine speed is given based upon a general setting. The rotational period fluctuation is controlled as follows, for example.

For example, a wavering rotational fluctuation as a period which is almost equal to the human's heartbeat is given to the engine speed in the normal operation. The period is elongated when the vehicle ascends an upslope, while the period is shorten when the vehicle descends a down slope. Also, no wavering rotational fluctuation control is made in an acceleration operation and in a deceleration operation. In this running speed control, modes which can be selected in accordance with preference of the rider can be prepared.

As thus discussed, the engine speed of the engine 10 is changed in response to the detection result of the vehicle state; thereby, vibrations and sounds of the engine 10 are intentionally changed in response to the vehicle state (a vehicle speed, a temperature, a residual gasoline amount, a battery condition, etc.) to be transmitted to the rider. For instance, when the vehicle comes to an upslope and runs with both of the power of the battery and the power generated by the engine, if the residual battery power approaches the preset lower limit, the engine speed can be increased, or the engine speed can have the periodic change and the period is shorten so that the rider can feel the driving state. Thereby, the vehicle condition can be transmitted to the rider as sensory or intuitive information. The information thus can be transmitted to the rider without giving uneasiness.

### [Possibility of Use in the Industry]

This invention is applicable to an electric vehicle running by driving a drive motor with generated electric power of a generator driven by an engine and with electric power of a battery.

### [Brief Description of Drawings]

FIG. 1 is a side elevational view of a hybrid type electric vehicle.
FIG. 2 is a cross sectional view taken along the line II-II of FIG. 1.
FIG. 3 is a cross sectional view taken along the line III-III of FIG. 1.
FIG. 4 is a cross sectional view taken along the line IV-IV of FIG. 1.
FIG. 5 is a graph for explaining a power transmission of the hybrid type electric vehicle.
FIG. 6 is a block diagram showing a schematic construction of the aspect of the invention recited in Claim 1.
FIG. 7 is a graph showing a relationship between an accelerator rotational angle and an accelerator output signal.
FIG. 8 is a block diagram showing a schematic construction of the aspect of the invention recited in Claim 2.
FIG. 9 is a block diagram showing a schematic construction of the aspect of the invention recited in Claim 3.
FIG. 10 is a graph showing a relationship between an accelerator rotational angle and an accelerator output signal.
FIG. 11 is a block diagram showing a schematic construction of the aspect of the invention recited in Claim 4.
FIG. 12 is a graph showing a condition under which an engine speed is changed in response to a vehicle state.

### [Description of Reference Numerals]

- 1:: hybrid type electric vehicle
- 2:: vehicle body
- 4:: steerable wheel
- 5a:: accelerator
- 7:: drive wheel
- 10:: engine
- 13:: generator
- 14:: fuel tank
- 15:: battery
- 16:: hybrid control controller
- 17:: motor controller
- 18:: drive motor
- 200:: motor control means
- 201:: residual battery power detecting means
- 210:: residual fuel amount detecting means
- 220: abnormality detecting means
- 230:: vehicle state detecting means
- A:: control device

## Claims

1. An electric vehicle running by driving a drive motor with generated electric power of a generator driven by an engine and with electric power of a battery, the electric vehicle comprises:
a residual battery power detecting means for detecting a residual power capacity of the battery; and
a motor control means for lowering a voltage of an accelerator output signal outputted in response to a rotational angle of an accelerator to be less than a voltage given under a condition that the residual power capacity is at or more than a preset lower limit, when the residual power capacity becomes less than the lower limit, so as to control a rotational speed of the drive motor.

2. An electric vehicle running by driving a drive motor with generated electric power of a generator driven by an engine and with electric power of a battery, the electric vehicle comprises:
a residual fuel amount detecting means for detecting a residual fuel amount of a fuel tank; and
a motor control means for lowering a voltage of an accelerator output signal outputted in response to a rotational angle of an accelerator to be less than a voltage given under a condition that the residual fuel amount is at or more than a preset lower limit, when the residual fuel amount becomes less than the lower limit, so as to control a rotational speed of the drive motor.

3. An electric vehicle running by driving a drive motor with generated electric power of a generator driven by an engine and with electric power of a battery, the electric vehicle comprises:
an abnormality detecting means for detecting abnormality of the vehicle; and
a motor control means for lowering the maximum voltage of an accelerator output signal outputted in response to a rotational angle of an accelerator to be less than the maximum voltage given under a normal condition, when the abnormality is detected, so as to control a rotational speed of the drive motor.

4. An electric vehicle running by driving a drive motor with generated electric power of a generator driven by an engine and with electric power of a battery, the electric vehicle comprises:
a vehicle state detecting means for detecting a vehicle state; and
an engine control means for changing an engine speed of the engine in response to a detection result of the vehicle state.
